# EUROPEAN PATENT SPECIFICATION

(11) **EP 0 488 984 B1**
(45) Date of publication and mention of the grant of the patent: **09.09.1998**
(21) Application number: 91870189.7
(22) Date of filing: 27.11.1991
(51) Int. Cl.: C08F 2/44, C08F 12/00, B01F 3/12

(54) **Apparatus for injecting solid insoluble additives into polymerization streams**
Apparat für die Einspritzung von festen unlöslichen Additiven in Polymerizationsströme
Appareil pour injecter des additifs solides insolubles dans des courants de polymérisation

(30) Priority: 30.11.1990 US 621396; 30.11.1990 US 621398; 30.11.1990 US 621107
(43) Date of publication of application: 03.06.1992
(73) Proprietor: FINA TECHNOLOGY, INC., Dallas, Texas 75206 (US)
(72) Inventor: Sosa, José M., Deerpark, Texas (US); Beisert, Stan, Houston, Texas (US)
(74) Representative: Leyder, Francis

(56) References cited:
- EP-A- 0 100 793
- GB-A- 1 073 456

## Description

### FIELD OF THE INVENTION

This invention relates to the field of polymerizing monovinyl aromatic compounds and more particularly discloses methods and apparatus for adding thermally-sensitive and oxidation-sensitive additives and anti-oxidants to the reactants in a monovinylaromatic polymerization system prior to or during the polymerization process.

### BACKGROUND OF THE INVENTION

Of all the thermoplastics manufactured today, probably the most versatile and most widely used class of materials is polymerized monovinyl aromatic compounds such as polystyrene, polymerized alpha-methyl styrene, and polymers of ring-substituted styrenes.

Virgin polystyrene manufactured by the polymerization of styrene monomer often requires the inclusion therein of additives such as pigments, stabilizers, anti-foaming agents, mold-release agents, plasticizers, and anti-oxidants. Plasticizers such as mineral oil and mold-release and stabilizer agents such as zinc stearate are necessary in the polymer to allow it to be formed in processing equipment into the final consumer products. Anti-oxidants such as Irganox 1076, a hindered phenol manufactured by Ciba-Geigy Corporation of Greensboro, North Carolina, are necessary to prevent the polymer from degrading with age and from exposure to ultra violet light from sources such as sunlight and artificial lighting.

As already mentioned, one of the most desirable, if not the most desirable, lubricant and mold-release agents added to polystyrene and other polymerized monovinyl aromatic compounds is zinc stearate. In conventional polymerization systems, zinc stearate is added to the process by first melting it in a closed heated vessel at 120° to 130°C and then pumping it into the polymerization system at the desired location. The problems with this approach are many.

First, the molten zinc stearates as well as other additives, oxidize easily at temperatures above their melting points, and must be completely shut off from any traces of air to prevent oxidation of the material, which causes yellow discoloration of the finished polymer. This is normally achieved by maintaining the headspace in the melting vessel filled with nitrogen.

Second, feeding problems often occur when trying to transport molten zinc stearate to the polymerization system. If any traces of air were allowed to leak in through the lines or fittings to the melt, the afore-mentioned oxidation will occur. Also, if the stearate supply piping were not maintained above the melt temperature of the stearate, the material would begin to solidify and precipitate out, clogging the lines or allowing solid chunks of the material into the polymerization process, adulterating the finished polymer.

### SUMMARY OF THE INVENTION

The present invention discloses methods and apparatus for adding additives such as plasticizers, stabilizers, mold-release agents and anti-oxidants into polymerization processes, and more particularly discloses methods and apparatus for adding mineral oil, zinc stearate and hindered phenol compounds to polymerization systems by forming a slurry of the additives in an agitated vessel and injecting the slurry into the process at the desired location, or locations, at easily-controlled temperatures.

### BRIEF DESCRIPTION OF THE DRAWINGS

Figure 1 is a schematic diagram of a typical monovinyl aromatic polymerization process illustrating the present invention in place therein.

Figure 2 is a schematic diagram of one embodiment of the slurry additive system for use in a polymerization process.

### DESCRIPTION OF THE PREFERRED EMBODIMENTS

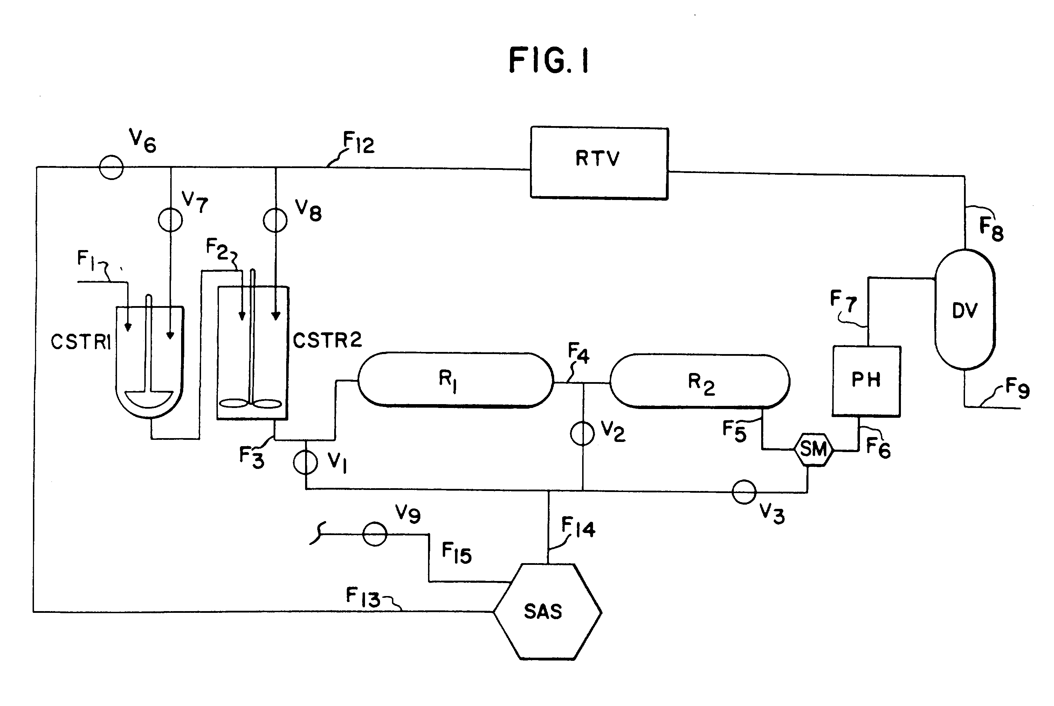

Referring to the illustration of Figure 1, this is a schematic diagram of a typical high impact polystyrene (HIPS) manufacturing process. such a process is more particularly described in-US Patent No. 4,857,587 in the name of Sosa et al, entitled "Continuous Process Including Recycle Stream Treatment for the Production of High Impact Polystyrene". In a typical high impact polystyrene process, such as that illustrated in Figure 1, refined styrene monomer feed is fed through flow line F1 into a stirred tank reactor (CSTR1) which is a continuous stirred tank reactor. Styrene, polybutadiene, a free-radical initiator, and additional components such as solvents, anti-oxidants, dyes, and other additives are fed into the reactor through feed line F1. As used herein, the term "styrene" includes a variety of substituted styrenes, such as alpha-methyl styrene, ring-substituted styrenes, such as p-methylstyrene and p-chlorostyrene, as well as unsubstituted styrene. Typically, the mixture in polymerization reactor CSTR1 will comprise about 75 to 99% by weight refined styrene, about 1 to 15% by weight polybutadiene, and the remainder being free-radical initiator and additional components.

The feed components fed through line F1 are stirred in CSTR1 and reaction between the components is initiated therein. The components are then fed through flow line F2 into a second continuous stirred tank reactor CSTR2 for additional reaction and agitation by stirring. From there the HIPS components are transferred through flow line F3 into an initial polymerization reactor R1. A pair of reactors R1, and R2, each comprising horizontal polymerization reactors may be used for the total polymerization process of the HIPS material. The polymerized styrene/butadiene mixture then exits reactor R2 and passes through flowline F5 to an optional static mixer SM and from there through flow line F6 into a preheater PH. From the preheater the polymerized product flows through line F7 into a devolatilizer DV where volatile components are transferred through line F8 to the recycle treatment vessel RTV. The finished HIPS material then exits DV through line F9 to the product finishing line where it may be pelletized or put into other transportable forms. The volatile elements removed in the devolatilizer DV are then passed through vessel RTV which usually comprises a filter bed such as clay to remove the acid components from the recycle stream. The refined recycle stream then moves through line F12 and may be recycled into the CSTR1 or CSTR2.

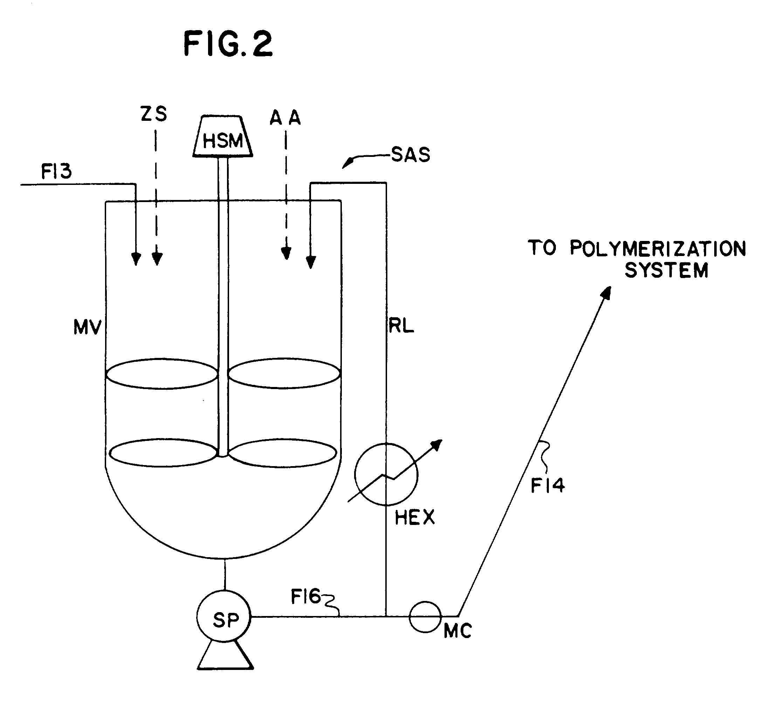

The description given above is that of a typical high impact polystyrene manufacturing system described from a schematic or flow diagram viewpoint. The present invention involves the use of a slurry additive system for adding components such as anti-oxidants, stabilizers, mold-release agents, and other desirable compounds. The slurry additive system is more particularly described in Figure 2 and is designated schematically at SAS with a feed input line F13 and a slurry supply line F14. Line F13, by means of manipulation of valves V6, V7, and V8, is arranged to provide recycled monomer from the RTV into the slurry additive system as a carrier for the additive to be injected into the polymerization reactor system R1-R2.

The recycle stream entering the SAS vessel through F13 is slurried with the desirable additive, such as the previously mentioned zinc stearate and hindered phenol additives, to be injected into the polymerization system by manipulating valves V1 through V3. Injection of the additive slurry may be directed at any point in the polymerization process: by closing all valves except V1 the additive slurry may be injected prior to the polymerization reactor R1. Likewise, by opening valves V2, and V3, and closing all the other valves, the injection points may be moved to the various locations shown in the drawings. The opening of valve V3 and closing of valves V1 and V2 introduces the additive slurry into the system after the final reactor vessel R2.

In this case, the optional static mixer SM must be utilized to thoroughly compound the additive slurry into the polymer stream. As previously mentioned, the static mixer SM is an optional element and is intended for the particular embodiment wherein the additive slurry is injected between the reactor system R1-R2 and the preheater PH. It is contemplated that if the injection point is at any other point in the system prior to reactor R2 then the static mixer SM will not be necessary and the output of R2 can be routed around the static mixer SM and into the preheater PH.

Alternatively, if it is undesirable to utilize the recycle stream for a carrier material in the 8AS, an alternate carrier fluid may be introduced into the slurry system through feed line F15 from an independent carrier material source (not shown). In one particular embodiment such a carrier material could be mineral oil which is often used as a plasticizer in polystyrene materials. In such a case, it would only be necessary to close valve V6 and open valves V7 and V8 as well as valve V9.

Referring now to Figure 2, there is illustrated a detailed schematic drawing of the slurry additive system SAS of Figure 1. The SAS comprises a high shear mixer HSM located in a mixing vessel MV and having the feed inlet line F13 flowing thereinto. A zinc stearate supply ZS, which is added as a solid is indicated in the dashed line next to flow line P13. Zinc stearate may be added to the vessel by any conventional means such as a vessel hatch or gear pump or other means for adding solid material into a closed vessel. The carrier fluid entering line F13, which as previously mentioned can be either mineral oil or the recycle stream from the devolatilizer DV, which primarily consists of about 80 to 90% styrene monomer, 5 to 10% ethylbenzene, and 5 to 10% xylenes, toluenes, and propyl-benzene, is added to the agitator MV along with zinc stearate from a ZS supply and subjected to high shear through the action of the high shear mixer. This forms a finely divided slurry of zinc stearate in the carrier fluid which is then pumped through volumetric slurry pump SP and out flow line F16. A mass controller MC is located in flow line F16 and a recycle loop RL is branched off of line F16 upstream mass control of MC and feeds back into vessel MV. This type of system is commonly known as a "pump-around" system. Thus the action of mass control MC, which may be a conventionally known valving system, allows a constant control of the feed amounts through line F14 to the polymerization system.

Any slurry that is not transported through line F14 is directed through return line RL back into the agitation of the high shear mixer HSM in vessel MV. This maintains a constant and consistent slurry of the zinc stearate in the carrier fluid and prevents settling out of the solids in the suspension. By controlling the amount of zinc stearate added to the mixing vessel MV and/or controlling the amount of recycle fluid, or alternate carrier fluid such as mineral oil, being added through lines F13 and F15, the amount of additive slurry entering the polymerization system through flow line F14 can be very precisely controlled. Conventional ratios of the slurry additive material are known to those skilled in the art and can be adjusted precisely through the use of mass controller MC and slurry pump SP. Temperature of the slurry is maintained at a desirable constant value by the utilization of heat exchanger HEX located in return line RL. In one preferred embodiment the temperature was maintained at about 21,11 C (70°F).

In addition to the placement of zinc stearate ZS into vessel MV, other additives can clearly be placed in the vessel to be slurried with the carrier fluid and the zinc stearate ZS. Such materials include those previously mentioned such as hindered phenols, anti-oxidants, solvents, initiators, and other such additives. The addition of other additives to the mixing vessel MV is indicated by a second dashed line designated at AA in Figure 2. As another alternative, the carrier fluid for the slurry may be made up of virgin styrene monomer diverted from feedline F1, or can be a mixture of virgin monomer and recycle stream fluid, as well as other solvents compatible with the process, such as ethylbenzene. In addition, the high shear mixer may be utilized to disperse insoluble liquids in the chosen carrier fluid in place of or in addition to insoluble solids.

### OPERATION OF THE PREFERRED EMBODIMENT

In typical operation, the slurry additive system SAS as illustrated more precisely in Figure 2, is supplied with a carrier fluid such as a virgin styrene monomer, recycle styrene stream, or optionally, a mineral oil plasticizer, and one or more solid additives such as zinc stearate and anti-oxidants are placed in solid form into the closed vessel. There they are subjected to high shear and converted into a very finely divided suspension or slurry which is maintained by the constant action of a high shear mixer and a pump-around system. As the additives are needed, the slurry is pumped through a mass-controller into the polymerization system at any point prior to, in the middle of, or at the downstream end of the polystyrene polymerization reactor system. By utilizing the present invention, the need for heated zinc stearate vessels with nitrogen atmospheres are eleminated as well as the need for heated flow lines to prevent solidification of additives such as zinc stearate. The present invention provides a simple yet efficient means for injecting solid additives in a finely divided state into the styrene polymerization/copolymerization system as illustrated in Figure 1. By controlling the amounts of solids added into the high shear mixer, slurries of known composition can be precisely obtained and injected into the polymerization system, very closely controlling the amount of additives and obtaining a fine, even distribution in the polymerizing sytrene.

It should also be noted that the optional heat exchanger HEX on line RL keeps the slurry at the desired temperature or within a desirable temperature range. There is no need for a nitrogen atmosphere in the mixing vessel since it is a closed vessel and the head-space is completely filled with the vapors generated from the recycle stream carrier fluid, but a nitrogen atmosphere can be utilized if desirable.

One particular additive utilized in styrene polymerization and added by the slurry additive system is solid zinc stearate. The agitation vessel MV was designed to maintain the particle size of the zinc stearate to less than 200 microns. The slurry was delivered to the polymerization process utilizing a volumetric pump SP to precislely control the concentration of the additive. The concentration of additives was adjusted to maintain proper viscosity, for example, approximately ten weight percent zinc stearate and ten weight percent Irganox 1076 were dispersed and added to the slurry system. If the soluble anti-oxidant Irganox were not to be utilized, then higher levels of zinc stearate could be used to maintain the viscosity. Irganox 1076 is soluble in styrene and thereby increases the viscosity of the solution. It was also found that by adding the anti-oxidant and other additives late in the process, i.e. for example, at the static mixer location, improved properties in the finished product could be obtained.

In summary, the slurry addition system is utilized to add heat-sensitive additives and additives that can possibly interfere in the early stages of the process into a monovinyl aromatic polymerization system.

Instead of using the present system to slurry solid insoluble additives in a carrier fluid, the system could be utilized to add commercially available preformed emulsions or dispersions, such as a silicon oil/water and zinc stearate/mineral oil, by insuring that "settling-out" does not occur in these formulations.

According to the present invention there is provided a process for polymerizing organic compounds in which liquid and solid soluble and insoluble additives comprising plasticizers, stabilizers, lubricants, and anti-oxidants are added to the compounds prior to, during, or after polymerization; the improvement consisting in the process of adding said additives, said process comprising the steps of:
a) supplying at least one insoluble additive to a high-shear mixer;
b) supplying a carrier fluid to said high-shear mixer;
c) subjecting said carrier fluid and said additive to high shear mixing thereby forming a finely divided substantially homogeneous slurry of additive particles in said carrier fluid;
d) injecting said slurry into said compounds in desirable amounts;
e) continuously subjecting said carrier fluid and said additive to high shear mixing; and,
f) pumping any excess slurry from said mixer through a pump-around loop, back into said mixer.

The additive (step a) preferably comprises zinc stearate and the carrier fluid (step b) preferably comprises mineral oil.

A substantial majority of said additive paricles are preferably sheared to a size of less than about 200 microns.

Said additives may further comprise an anti-oxidant which preferably consists essentially of a hindered pherol.

The above-identified process may further comprise the step of flowing said homogeneous slurry through a heat exchanger in said pump-around loop and thereby maintaining the temperature of said slurry within a predetermined desirable range.

The above-identified process may further comprise the step of adding virgin unreacted organic monomer from said polymerizing process into said high-shear mixer.

In the above-identified process, the additive (step a) and the carrier fluid (step b) may comprise a previously prepared liquid/solid dispersion or emulsion.

According to the present invention, there is also provided an apparatus for for adding additives to a polymerization process, said apparatus comprising :
a mixing vessel adapted to divide an additive into evenly-sized, finely-divided particles;
an inlet flow line arranged to provide carrier fluid into said mixing vessel;
an entry port in said vessel for receiving additive materials;
an exit port connected to a flow line, adapted to transmit a slurry from said vessel; and,
a flow control and measurement system connected to said exit port flow line arranged to precisely measure and control the amount of said slurry flowing thereoutof.

The vessel preferably comprises a high shear mixer arranged to divide additives into particles, a substantial percentage of which are below about 200 microns in size, and further adapted to mix said particles with said carrier fluid and form and maintain a slurry thereof.

The flow control and measurement system preferably comprises a volumetric pump and a mass controller, connected in series and may further comprise a pump-around loop leading back into said mixing vessel from a point between said pump and said controller.

According to a preferred embodiment of the present invention, the apparatus for adding additives to a polymerization process further comprises a heat exchanger arranged to maintain the slurry in said mixing vessel at a desirable temperature within a predetermined desirable range; said heat exchanger is preferably located in said pump-around loop.

## Claims

1. In a process for polymerizing organic compounds in which liquid and solid soluble and insoluble additives comprising plasticizers, stabilizers, lubricants, and anti-oxidants are added to the compounds prior to, during, or after polymerization; the improvement consisting in the process of adding said additives, said process comprising the steps of:
a) supplying at least one insoluble additive to a high-shear mixer;
b) supplying a carrier fluid to said high-shear mixer;
c) subjecting said carrier fluid and said additive to high shear mixing thereby forming a finely divided substantially homogeneous slurry of additive particles in said carrier fluid;
d) injecting said slurry into said compounds in desirable amounts;
e) continuously subjecting said carrier fluid and said additive to high shear mixing; and,
f) pumping any excess slurry from said mixer through a pump-around loop, back into said mixer.

2. The process of claim 1 wherein said additive comprises zinc stearate.

3. The process of claim 2 wherein said carrier fluid comprises mineral oil.

4. The process of claim 3 wherein a substantial majority of said additive paricles are sheared to a size of less than about 200 microns.

5. The process of claim 4 wherein said additives further comprise an anti-oxidant.

6. The process of claim 5 wherein said anti-oxidant consists essentially of a hindered phenol.

7. The process of claim 1 further comprising the step of flowing said homogeneous slurry through a heat exchanger in said pump-around loop and thereby maintaining the temperature of said slurry within a predetermined desirable range.

8. The process of claim 1 further comprising the step of adding virgin unreacted organic monomer from said polymerizing process into said high-shear mixer.

9. The process of claim 1 wherein said additive and said carrier fluid comprise a previously-prepared liquid/solid dispersion.

10. The process of claim 1 wherein said additive and said carrier fluid comprise a previously-prepared liquid/liquid emulsion.

11. Apparatus for adding additives to a polymerization process, said apparatus comprising :
a mixing vessel adapted to divide an additive into evenly-sized, finely-divided particles;
an inlet flow line arranged to provide carrier fluid into said mixing vessel;
an entry port in said vessel for receiving additive materials;
an exit port connected to a flow line, adapted to transmit a slurry from said vessel; and,
a flow control and measurement system connected to said exit port flow line arranged to precisely measure and control the amount of said slurry flowing thereoutof.

12. The apparatus of claim 11 wherein said vessel comprises a high shear mixer arranged to divide additives into particles, a substantial percentage of which are below about 200 microns in size, and further adapted to mix said particles with said carrier fluid and form and maintain a slurry thereof.

13. The apparatus of claim 11 wherein said flow control and measurement system comprises a volumetric pump and a mass controller, connected in series.

14. The apparatus of claim 13 wherein said flow control and measurement system further comprises a pump-around loop leading back into said mixing vessel from a point between said pump and said controller.

15. The apparatus of claim 11 further comprising a heat exchanger arranged to maintain the slurry in said mixing vessel at a desirable temperature within a predetermined desirable range.

16. The apparatus of claim 15 wherein said heat exchanger is located in said pump-around loop.

## Patentansprüche

1. In einem Verfahren zum Polymerisieren organischer Verbindungen, wobei Flüssigkeit und feste lösliche und unlösliche Additive, die Weichmacher, Stabilisatoren, Gleitmittel und Antioxidantien umfassen, den Verbindungen vor, während oder nach der Polymerisation hinzugefügt werden, gekennzeichnet durch das Verfahren des Hinzufügens der Additive, wobei das Verfahren die Stufen umfaßt:
a) Liefern mindestens eines unlöslichen Additivs zu einem Hochschermischer,
b) Liefern einer Trägerflüssigkeit zu dem Hochschermischer,
c) Aussetzen der Trägerflüssigkeit und des Additivs Hochschermischen, wodurch eine fein verteilte im wesentlichen homogene Aufschlämmung von Additivteilchen in der Trägerflüssigkeit gebildet wird,
d) Einspritzen der Aufschlämmung in die Verbindungen in wünschenswerten Mengen,
e) kontinuierliches Aussetzen der Trägerflüsigkeit und des Additivs Hochschermischen und
f) Pumpen irgendwelcher überschüssigen Aufschlämmung aus dem Mischer durch eine Rundum-Pumpen-Schleife zurück in den Mischer.

2. Das Verfahren nach Anspruch 1, wobei das Additiv Zinkstearat umfaßt.

3. Das Verfahren nach Anspruch 2, wobei die Trägerflüssigkeit Mineralöl umfaßt.

4. Das Verfahren nach Anspruch 3, wobei eine wesentliche Mehrheit der Additivteilchen zu einer Größe von weniger als etwa 200 Mikrometern schergeschnitten wird.

5. Das Verfahren nach Anspruch 4, wobei die Additive ferner ein Antioxidans umfassen.

6. Das Verfahren nach Anspruch 5, wobei das Antioxidans im wesentlichen aus einem gehinderten Phenol besteht.

7. Das Verfahren nach Anspruch 1, ferner umfassend die Stufe des Fließens der homogenen Aufschlämmung durch einen Wärmeaustauscher in die Rundum-Pumpen-Schleife und dadurch Aufrechterhalten der Temperatur der Aufschlämmung innerhalb eines vorher festgelegten wünschenswerten Bereichs.

8. Das Verfahren nach Anspruch 1, ferner umfassend die Stufe des Hinzugebens von nicht umgesetztem organischem Neumonomerem aus dem Polymerisationsverfahren in den Hochschermischer.

9. Das Verfahren nach Anspruch 1, wobei das Additiv und die Trägerflüssigkeit eine zuvor hergestellte Flüssigkeit-/Feststoffdispersion umfassen.

10. Das Verfahren nach Anspruch 1, wobei das Additiv und die Trägerflüssigkeit eine zuvor hergestellte Flüssigkeit-/Flüssigkeitemulsion umfassen.

11. Vorrichtung zum Hinzufügen von Additiven zu einem Polymerisationsverfahren, wobei die Vorrichtung umfaßt:
einen Mischkessel, angepaßt, ein Additiv in fein verteilte Teilchen gleicher Größe zu verteilen,
eine Einlaßflußleitung, angeordnet, Trägerflüssigkeit in den Mischkessel zu liefern,
eine Einlaßöffnung in dem Kessel zum Aufnehmen von Additivmaterialien,
eine Auslaßöffnung, verbunden mit einer Flußleitung, angepaßt, eine Aufschlämmung aus dem Kessel zu übertragen, und ein Fließkontroll- und Meßsystem, verbunden mit der Auslaßöffnungsflußleitung, angeordnet, die Menge der daraus fließenden Aufschlämmung genau zu messen und zu kontrollieren.

12. Die Vorrichtung nach Anspruch 11, wobei der Kessel einen Hochschermischer umfaßt, angeordnet, Additive in Teilchen zu verteilen, wobei ein wesentlicher Prozentsatz davon unterhalb etwa 200 Mikrometer an Größe ist, und ferner angepaßt, die Teilchen mit der Trägerflüssigkeit zu mischen und eine Aufschlämmung davon zu bilden und beizubehalten.

13. Die Vorrichtung nach Anspruch 11, wobei das Fließkontroll- und Meßsystem eine volumetrische Pumpe und ein Massenkontrollgerät, in Reihe verbunden, umfaßt.

14. Die Vorrichtung nach Anspruch 13, wobei das Fließkontroll- und Meßsystem ferner eine Rundum-Pumpen-Schleife, die zurück in den Mischkessel von einem Punkt zwischen der Pumpe und dem Kontrollgerät führt, umfaßt.

15. Die Vorrichtung nach Anspruch 11, die zusätzlichen einen Wärmeaustauscher, angeordnet, die Aufschlämmung in dem Mischkessel auf einer wünschenswerten Temperatur innerhalb eines vorher festgelegten wünschenswerten Bereichs zu halten, umfaßt.

16. Die Vorrichtung nach Anspruch 15, wobei der Wärmeaustauscher in der Rundum-Pumpen-Schleife angeordnet ist.

## Revendications

1. Dans un procédé pour polymériser des composés organiques, dans lequel on ajoute aux composés, avant, pendant ou après la polymérisation, des additifs liquides et solides, solubles et insolubles, comprenant des plastifiants, des stabilisateurs, des lubrifiants et des antioxydants, le perfectionnement concernant le processus d'addition desdits additifs, ledit procédé comprenant les étapes consistant à:
a) alimenter au moins un additif insoluble à un mélangeur à cisaillement intime;
b) alimenter un fluide de support audit mélangeur à cisaillement intime;
c) soumettre ledit fluide de support et ledit additif à un mélangeur à cisaillement intime pour ainsi former une pâte épaisse finement divisée essentiellement homogène de particules d'additifs dans ledit fluide de support;
d) injecter ladite pâte épaisse dans lesdits composés dans des quantités désirables;
e) soumettre en continu ledit fluide de support et ledit additif à un mélange à cisaillement intime; et
f) pomper tout excès de pâte épaisse depuis ledit mélangeur, via une boucle de pompe de circulation, en retour dans ledit mélangeur.

2. Procédé selon la revendication 1, dans lequel ledit additif comprend du stéarate de zinc.

3. Procédé selon la revendication 2, dans lequel ledit fluide de support comprend de l'huile minérale.

4. Procédé selon la revendication 3, dans lequel une majorité substantielle desdites particules de support sont soumises à un cisaillement pour obtenir une dimension inférieure à environ 200 microns.

5. Procédé selon la revendication 4, dans lequel lesdits additifs comprennent en outre un antioxydant.

6. Procédé selon la revendication 5, dans lequel ledit antioxydant est constitué essentiellement d'un phénol à empêchement stérique.

7. Procédé selon la revendication 1, comprenant en outre l'étape consistant à faire en sorte que ladite pâte épaisse homogène s'écoule à travers un échangeur de chaleur dans ladite boucle de pompe de circulation et à maintenir ainsi la température de ladite pâte épaisse dans un domaine désirable prédéterminé.

8. Procédé selon la revendication 1, comprenant en outre l'étape consistant à ajouter un monomère organique vierge n'ayant pas réagi, à partir dudit procédé de polymérisation, dans ledit mélangeur à cisaillement intime.

9. Procédé selon la revendication 1, dans lequel ledit additif et ledit fluide de support comprennent une dispersion liquide/solide préparée au préalable.

10. Procédé selon la revendication 1, dans lequel ledit additif et ledit fluide de support comprennent une émulsion liquide/liquide préparée au préalable.

11. Appareil pour ajouter des additifs à un procédé de polymérisation, ledit appareil comprenant:
un récipient de mélange conçu pour diviser un additif en particules finement divisées de dimension uniforme;
une ligne d'écoulement d'entrée arrangée pour alimenter un fluide de support dans ledit récipient de mélange;
un orifice d'entrée dans ledit récipient pour recevoir des matières d'addition;
un orifice de sortie relié à une ligne d'écoulement, conçu pour transmettre une pâte épaisse à partir dudit récipient; et
un système de commande et de mesure de l'écoulement relié à ladite ligne d'écoulement à orifice de sortie pour mesurer et contrôler avec précision la quantité de ladite pâte épaisse qui en sort par écoulement.

12. Appareil selon la revendication 1, dans lequel ledit récipient comprend un mélangeur à cisaillement intime arrangé pour diviser des additifs en particules dont la dimension d'un pourcentage important est inférieure à environ 200 microns, et conçu en outre pour mélanger lesdites particules avec ledit fluide de support et pour former et maintenir une pâte épaisse les comprenant.

13. Appareil selon la revendication 11, dans lequel ledit système de commande et de mesure de l'écoulement comprend une pompe volumétrique et un contrôleur de la masse montés en série.

14. Appareil selon la revendication 13, dans lequel ledit système de commande et de mesure de l'écoulement comprend en outre une boucle de pompe de circulation menant en retour audit récipient de mélange depuis un endroit situé entre ladite pompe et ledit contrôleur.

15. Appareil selon la revendication 11, comprenant en outre un échangeur de chaleur arrangé pour maintenir la pâte épaisse dans ledit récipient de mélange à une température désirable dans un domaine désirable prédéterminé.

16. Appareil selon la revendication 15, dans lequel ledit échangeur de chaleur est situé dans ladite boucle de pompe de circulation.
